# EUROPÄISCHE PATENTSCHRIFT

(11) **EP 0 504 853 B1**
(45) Veröffentlichungstag und Bekanntmachung des Hinweises auf die Patenterteilung: **25.10.1995**
(21) Anmeldenummer: 92104710.6
(22) Anmeldetag: 18.03.1992
(51) Int. Cl.: B01D 25/176, B01D 25/00

(54) **Verfahren zum Herstellen vom Filtertuch für Filterpressen**
Method of manufacturing filter cloth for filter presses
Procédé pour la fabrication de la toile filtrante pour fitre-presses

(30) Priorität: 18.03.1991 DE 9103290 U
(43) Veröffentlichungstag der Anmeldung: 23.09.1992
(73) Patentinhaber: OTTO MARKERT & SOHN, 24539 Neumünster (DE)
(72) Erfinder: Bartolitius, Peter, W-2350 Neumünster (DE)
(74) Vertreter: Glawe, Delfs, Moll & Partner

(56) Entgegenhaltungen:
- EP-A- 0 003 046
- BE-A- 661 675
- DE-A- 2 402 587
- GB-A- 2 136 308
- US-A- 1 617 597

## Beschreibung

Die Erfindung betrifft ein Verfahren zum Verbinden zweier ein Loch aufweisender Filtertuchhälften für Filterpressen.

Filtertücher dieser Art finden veilfache Anendung z.B. bei der Abwasserbehandlung, bei der Produktfiltration und Entsorgungswirtschaft. Die Filtertücher werden auf Filterplatten angeordnet. Ein Beispiel von vielen sind Filtertücher für Kammerfilterpressen, auf die im folgenden in erster Linie zum Zwecke der Erläuterung Bezug genommen wird, ohne die Erfindung aber auf diese Anwendung einzuschränken, da bei anderen Anwendungen ähnliche Probleme auftreten.

Diese Filtertücher für Kammerfilterpressen weisen zwei parallel anzuordnende Filtertuchhälften auf, die z.B. im mittigen Bereich mit einem Loch versehen sind und im Bereich dieses Lochs mit einem schlauchförmigen Element miteinander verbunden sind.

Diese Filtertücher werden so auf die einzelnen Filterplatten der Filterpressen aufgebracht, daß die beiden Filtertuchhälften gegenüberliegende Flächen der Filterplatten bedecken. Mehrere solche mit Filtertüchern bespannten Filterplatten werden dann zusammengepreßt. In den Hohlraum zwischen den Tüchern wird die zu filtrierende Suspension hineingepumpt und strömt unter Zurücklassung des Filterkuchens in den Drainageraum hinter den Tüchern und fließt von dort nach außen ab.

Es ist bekannt, das schlauchförmige Element mit den Filtertuchhälften durch Kleben zu verbinden, wodurch beim Nähvorgang durch die Stiche in den Filtertuchhälften entstehende Löcher und andere Nachteile vermieden werden (GB-A-2 136 308). Bei der Herstellung solcher vorbekannter Filtertücher treten aber Schwierigkeiten auf.

Die Positionierung der Filtertuchhälften beim Verbinden mit dem schlauchförmigen Element erfolgt bisher von Hand ohne irgendwelche festen Fixierungen zur Einhaltung einer exakten Parallelität. Dadurch können sich beim Einsatz der Filtertücher Falten bilden. Die Verbindung der Filtertuchhälften erfolgt daher nicht mit ausreichender Wiederholgenauigkeit und einstellbaren und überprüfbaren Parametern.

Die Aufgabe der Erfindung besteht in der Schaffung eines Verfahrens, mit dem die beiden Filtertuchhälften einfach, genau und zuverlässig durch das schlauchförmige Element verbunden werden können.

Die erfindungsgemäße Lösung besteht darin, daß die Filtertuchhälften relativ zueinander positioniert werden und ein schlauchförmiges Element in einer mindestens vierteiligen Spritzgußform im Bereich der miteinander ausgerichteten Löcher durch Spritzguß hergestellt und dabei mit den Filtertuchhälften verbunden wird.

Das Ein erfindungsgemäße Verfahren zeichnet sich dadurch aus, daß die Verbindung der Filtertuchhälften unter exakt definierten und überprüfbaren Bedingungen bei gleichzeitiger exakter Wiederholgenauigkeit hergestellt werden kann. Es ist dabei eine form- und kraftschlüssige Verbindung der Filtertuchhälften bei gleichzeitigem naht- und spaltlosem Übergang zwischen schlauchförmigem Verbindungselement und Filtertuch möglich. Dadurch wird die Haftungsneigung des auszutragenden Filterkuchens in diesem Bereich deutlich verringert.

Es ist in einer entsprechenden Form eine exakte Positionierung möglich. Von der mindestens vierteiligen Spritzgußform werden die Filtertuchhälften im Bereich der Löcher umschlossen. Das Material für das schlauchförmige Verbindungselement wird dann hier eingespritzt und umgreift die Filtertuchhälften im Bereich des Umfangs der Löcher form- und kraftschlüssig.

Auf diese Weise wird das zweiteilige Filtertuch in einem Arbeitsgang hergestellt.

Zum Anspritzen kann vorteilhafterweise ein Mehrkomponenten-Polyurethan verwendet werden. Die Komponenten können dabei schon vor dem Einspritzen in die Spritzgußform miteinander vermischt werden, so daß innerhalb der Spritzgußform keine Mischelemente vorgesehen werden müssen.

Vorteilhafterweise wird ein Polyurethan verwendet, das im Endzustand wasserundurchlässig ist, so daß sich im Bereich des schlauchförmigen Elements kein Filterkuchen absetzt.

Insbesondere dann, wenn das Filtertuch das Polyurethan abweisende Oberflächen hat, kann im Bereich der Anspritzung eine Oberflächenbehandlung (Aufrauhung) vorgesehen werden und/oder es können hier Perforierungen vorgesehen werden, die vom Polyurethan ausgefüllt werden. Es findet so ein Durchdringen der zu verbindenden Filtertücher durch das Polyurethan statt.

Die Form kann ohne Schwierigkeiten so ausgebildet werden, daß eine Lagepositionierung zur Zentrierung und winkelgenauen Ausrichtung der Filtertücher möglich ist. Es kann auch ein Niveauausgleich für verschiedene Tuchdicken im Bereich von insbesondere 0,2 bis 3 mm durch automatische oder manuelle Verstellung der Gußelemente vorgesehen sein.

Das schlauchförmige Verbindungselement kann ebenfalls in verschiedenen Wandstärken und auch mit unterschiedlichen Shorehärten hergestellt werden. Die Zusammensetzung des Polyurethans hinsichtlich Flexibilität, Weiterreißfestigkeit, Hydrolysebeständigkeit und mechanischer Beständigkeit ist über die Komponentenzusammensetzung einstellbar.

Es können auch solche Polyurethane verwendet werden, die schadstoffbeständig gegen alle in Filterpressen auftretenden Schadstoffe rezeptiert sind. Das Polyurethan kann dabei variabel mischbar als Zwei- oder Mehrkomponentensystem ausgerüstet sein. Es kann weiter ein solches Polyurethan eingesetzt werden, das nicht vulkanisiert werden muß oder keine sonstige thermische Nachbehandlung für die Vernetzung erfordert. Auch schädliche Emissionen, wie sie in der TA-Luft der neuesten Fassung definiert sind, können vermieden werden. Die geschlossenen Formen können variabel in Höhe, Wandstärke, Flanschbreite und Farbe hergestellt werden, wobei Spritzformen vier- oder mehrteilig sein können.

Vorteilhafterweise werden die Löcher, in deren Bereich die Verbindung erfolgen soll, mit einem Laser geschnitten. Der Laser kann hierbei bei einer vorteilhaften Ausführungsform auch dazu verwendet werden, die Filtertuchhälften durch Aufschmelzen thermisch zu behandeln.

Die Filtertuchhälften können aus ein- oder mehrlagigen Materialien bestehen. Hat das Filtertuch auf einer Seite eine glatte Fläche, die anschließend außenliegen soll, so können die Filtertuchhälften von einer Materialbahn abgenommen werden, wenn zusätzlich umschlaggenaue Positionierhilfen vorgesehen sind, mit denen die eine Filtertuchhälfte gegenüber der anderen um 180° gedreht wird.

Die Materialzufuhr sowie die Materialentnahme für Rohstoffe und Filtertuchhäften kann sowohl manuell als auch vollautomatisch erfolgen.

Die Erfindung wird im folgenden anhand einer vorteilhaften Ausführungsform unter Bezugnahme auf die beigefügten Zeichnungen beschrieben. Es zeigen:
- Fig. 1: in schematischer Darstellung den Aufbau einer Filterpresse;
- Fig. 2: eine Schnittansicht eines Filtertuchs entlang der Linie II-II von Fig. 3;
- Fig. 3: eine dazu senkrechte Schnittansicht des Filtertuchs der Fig. 2 entlang der Linie III-III von Fig. 2; und
- Fig. 4: in einer ähnlichen Ansicht wie in Fig. 3 ein Filtertuch, das nach dem erfindungsgemäßen Verfahren hergestellt ist.

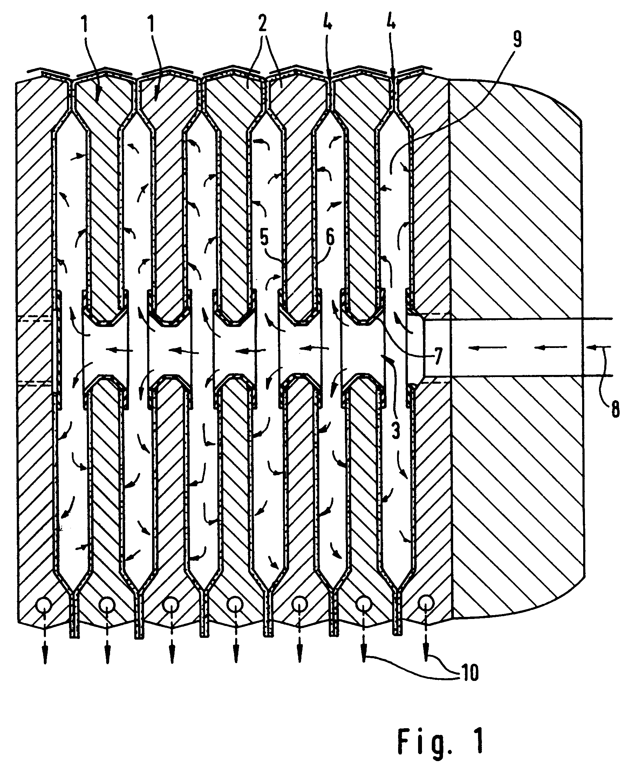

Wie dies in Fig. 1 im Schnitt dargestellt ist, weist eine Filterpresse mehrere Filterplatten 1 auf, die im Randbereich 2 mit Verdickungen versehen sind. Statt Filterplatten mit Randverdickung können Filterplatten mit im wesentlichen flacher Oberfläche in Verbindung mit separaten Rahmenelementen verwendet werden. Im Mittelbereich weisen die Filterplatten eine Öffnung 3 auf. Auf die Filterplatten 1 sind Filtertücher 4 aufgezogen, die aus zwei Hälften 5, 6 bestehen, die auf den beiden Flächen der Filterplatten aufliegen. Diese beiden Filtertuchhälften 5 und 6 sind bei 7 durch ein schlauchförmiges Element miteinander verbunden, damit hier die Filterplatte nicht ungeschützt der Suspension ausgesetzt ist, die bei 8 in die Filterpresse eingeführt wird und in die Filterkammern 9 zwischen Filterplatten 1 gelangt. Dort dringt nun die Flüssigkeit durch die Filtertücher 4 in die Filterplatten 1 ein, von wo sie in Richtung der Pfeile 10 durch entsprechende Kanäle abgeleitet wird. Der Filterkuchen sammelt sich auf der Oberfläche der Filtertücher.

Im Normalfall werden die Filterplatten 1 durch eine entsprechend große Kraft zusammengedrückt, so daß sie in ihren Randbereichen zwei benachbarte Filtertücher so fest aufeinanderpressen, daß hier keine Flüssigkeit austreten kann. Zum Reinigen der Filtertücher vom sich ansammelnden Filterkuchen können die Filterplatten 1 auseinanderbewegt werden, so daß der Filterkuchen aus den Filterkammern 9 herausfallen kann.

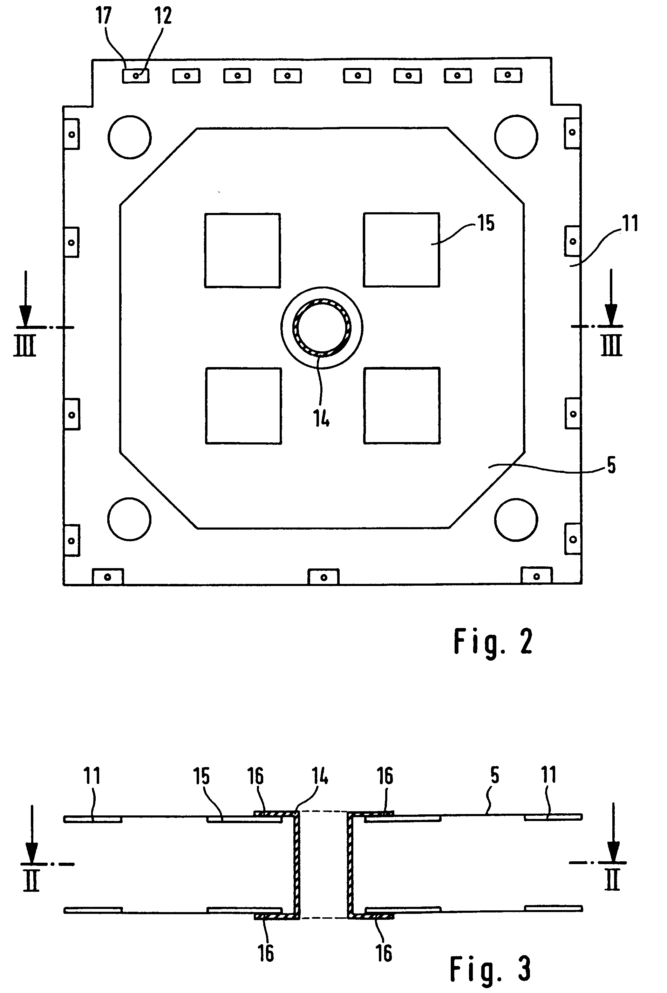

Die Filterplatten 1 weisen nicht nur Randverdickungen 2 auf, sondern auch zwischen diesen Randverdickungen 2 und dem mittleren Teil in der Fig. nicht gezeigte Stützvorsprünge auf. Solche Stützvorsprünge sind aber z.B. bei Pressen mit den erwähnten separaten Rahmen im allgemeinen nicht vorgesehen. Die Filtertücher 4 sind sowohl im Bereich der Verdickungen 2 als auch gegebenenfalls im Bereich der nicht gezeigten Stützvorsprünge mit Verstärkungen versehen, die in den Figuren 2 und 3 gezeigt sind.

Wie dies dort gezeigt ist, weisen die Filtertuchhälften 5, 6 eine Randverstärkung 11 auf, die noch mit Befestigungslöchern 12 versehen ist. Außerdem sind zwischen der Randverstärkung 11 und dem schlauchförmigen Element 14 bzw. dem entsprechenden Mittelloch Stützverstärkungen 15 vorgesehen. Die Verstärkungen 11 und 15 bestehen dabei entweder ebenfalls aus Gewebe oder Nadelfilz und sind an den Filtertuchhälften 5, 6 angeklebt. Die Verstärkungen 11 und 15 können aber auch ganz aus einem geschäumten Kunststoff bestehen, der eine klebende Verbindung mit dem Filtertuch 5 oder 6 eingeht. Auch das schlauchförmige Element ist durch Verklebung bei 16 mit den Filtertuchhälften 5, 6 verklebt.

Im Bereich der Löcher 12 sind Verstärkungselemente 17 aus nichtgeschäumtem Kunststoff angebracht, die dann anschließend durchbohrt, durchschnitten oder durchstanzt sind, so daß hier die Filtertücher mit Bändern oder dergleichen zusammengebunden und an den Filterplatten fixiert werden können.

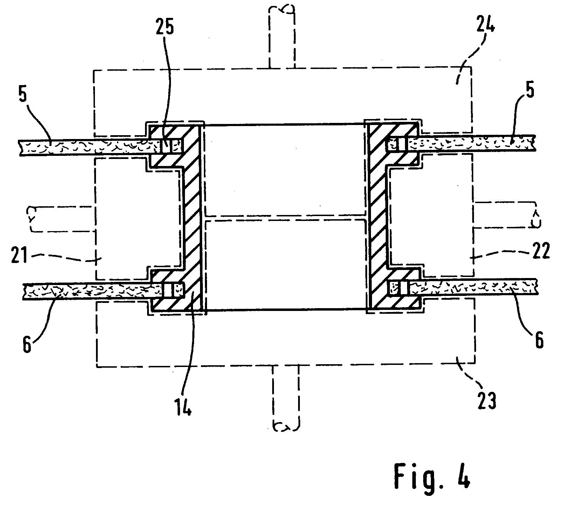

Bei der in Fig. 4 dargestellten Ausführungsform sind die Filtertuchhälften 5, 6 erfindungsgemäß in einer Spritzform durch ein schlauchförmiges Verbindungselement 14 miteinander verbunden worden. Die Spritzform besteht dabei aus vier Teilen 21, 22, 23 und 24, die in der Fig. gestrichelt dargestellt sind. Endbereiche des schlauchförmigen Elements 14 umgreifen jeweils am Umfang des Lochs die Filtertuchhälften 5 und 6, wobei die kraft- und formschlüssige Verbindung noch verbessert werden kann, wenn die Filtertuchhälften 5, 6 in diesem Bereich mit Perforierungen oder Löchern 25 versehen sind.

## Patentansprüche

1. Verfahren zum Verbinden zweier ein Loch aufweisender Filtertuchhälften für Filterpressen, dadurch gekennzeichnet, daß die Filtertuchhälften relativ zueinander positioniert werden und ein schlauchförmiges Element in einer mindestens vierteiligen Spritzgußform im Bereich der miteinander ausgerichteten Löcher durch Spritzguß hergestellt und dabei mit den Filtertuchhälften verbunden wird.

2. Verfahren nach Anspruch 1, dadurch gekennzeichnet, daß zum Anspritzen ein Mehrkomponentenpolyurethan verwendet wird.

3. Verfahren nach Anspruch 2, dadurch gekennzeichnet, daß das Polyurethan wasserundurchlässig ist.

4. Verfahren nach einem der Ansprüche 1 bis 3, dadurch gekennzeichnet, daß die Filtertücher im Bereich der Anspritzung einer Oberflächenbehandlung unterzogen und/oder mit Perforierungen versehen werden.

5. Verfahren nach einem der Ansprüche 1 bis 4, dadurch gekennzeichnet, daß die Löcher mit einem Laser geschnitten werden.

## Claims

1. Method of joining two filter cloth halves, having a hole, for filter presses, characterized in that the filter cloth halves are positioned in relation to each other and a tubular element is produced by injection moulding in an at least four-part injection mould in the region of the holes aligned with each other and is thereby bonded to the filter cloth halves.

2. Method according to Claim 1, characterized in that a multi-component polyurethane is used for the moulding on.

3. Method according to Claim 2, characterized in that the polyurethane is water-impermeable.

4. Method according to one of Claims 1 to 3, characterized in that the filter cloths are subjected to a surface treatment and/or are provided with perforations in the region of the moulding on.

5. Method according to one of Claims 1 to 4, characterized in that the holes are cut by a laser.

## Revendications

1. Procédé pour la jonction de deux moitiés de tissu filtrant présentant un trou, utilisées dans des filtrespresses, caractérisé en ce que les moitiés de tissu filtrant sont positionnées l'une par rapport à l'autre, et en ce qu'un élément tubulaire est fabriqué par moulage par injection, dans la région des trous alignés mutuellement, dans un moule à injection en quatre parties au moins et est ainsi fixé aux moitiés de tissu filtrant.

2. Procédé selon la revendication 1, caractérisé en ce qu'un polyuréthanne à plusieurs composants est utilisé pour l'injection.

3. Procédé selon la revendication 2, caractérisé en ce que le polyuréthanne est imperméable à l'eau.

4. Procédé selon l'une quelconque des revendications 1 à 3, caractérisé en ce que, dans la région de l'injection, les tissus filtrants sont soumis à un traitement superficiel et/ou munis de perforations.

5. Procédé selon l'une quelconque des revendications 1 à 4, caractérisé en ce que les trous sont découpés au laser.
